(19) Europäisches Patentamt
European Patent Office
Office européen des brevets

(11) EP 2 053 092 B1

(12) # EUROPEAN PATENT SPECIFICATION

(45) Date of publication and mention of the grant of the patent:
**12.12.2012 Bulletin 2012/50**

(21) Application number: **07792552.7**

(22) Date of filing: **15.08.2007**

(51) Int Cl.:
***C08L 71/02*** (2006.01) ***C08G 65/336*** (2006.01)
***C08K 5/134*** (2006.01)

(86) International application number:
**PCT/JP2007/065918**

(87) International publication number:
**WO 2008/020600 (21.02.2008 Gazette 2008/08)**

(54) **POLYMER COMPOSITION**

POLYMERZUSAMMENSETZUNG

COMPOSITION DE POLYMÈRE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **16.08.2006 JP 2006221809**

(43) Date of publication of application:
**29.04.2009 Bulletin 2009/18**

(73) Proprietor: **Asahi Glass Company, Limited**
**Chiyoda-ku**
**Tokyo 100-8405 (JP)**

(72) Inventors:
- **KIMURA, Yuuji**
**Kamisu-city, Ibaraki 314-0195 (JP)**
- **TANAKA, Hideaki**
**Kamisu-city, Ibaraki 314-0195 (JP)**
- **ENNA, Genichirou**
**Kamisu-city, Ibaraki 314-0195 (JP)**
- **FUTAMI, Tatsuhiro**
**Kamisu-city, Ibaraki 314-0195 (JP)**

(74) Representative: **Hartz, Nikolai et al**
**Wächtershäuser & Hartz**
**Patentanwaltspartnerschaft**
**Ottostrasse 4**
**80333 München (DE)**

(56) References cited:
**WO-A1-2004/092270 WO-A1-2004/092270**
**WO-A1-2004/096887 WO-A1-2004/096887**
**JP-A- 07 090 171 JP-A- 2002 155 145**
**JP-A- 2002 249 538**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 053 092 B1

## Description

### TECHNICAL FIELD

The present invention relates to a polymer composition containing an oxyalkylene polymer having a urethane bond and an alkoxysilyl group.

### BACKGROUND ART

A curable composition made of a polymer having a hydrolyzable silicon group at the terminal of a polyoxyalkylene chain (also called a modified silicone polymer), forms a cured product excellent in rubber elasticity by moisture-curing. Therefore, the curable composition is widely used as an adhesive, a coating agent or a sealing material. Especially, a curable composition made of a polymer having a methyldimethoxysilyl group at the terminal of a polyoxyalkylene chain is widely accepted in a market as a sealing material due to its excellent elongation physical property (cf. Patent Document 1).

Further, a curable composition containing a polymer having a polyoxyalkylene chain and a trialkoxysilyl group has a high curing rate and a high crosslink density, whereby it is useful as a curable adhesive, a coating agent or a sealing material (cf. Patent Document 2).

As a curable composition, a curable composition is known which contains a specific polymer having a polyoxyalkylene chain and a trialkoxysilyl group bonded to the terminal of the polyoxyalkylene chain through a $-OCH_2CH_2CH_2-$ group or a $-SCH_2CH_2CH_2-$ group, or a specific polymer having a polyoxyalkylene chain and a trialkoxysilyl group bonded to the terminal of the polyoxyalkylene chain through a urethane bond, and a compound having an amino group and an alkoxysilyl group (cf. Patent Document 3).

In such a curable composition, a curing catalyst is mixed for curing, but the above specific polymer before mixed with the curing catalyst, is desired to have the increase of its viscosity suppressed as much as possible during storage.

The specific polymer having a trialkoxysilyl group bonded to the terminal of the polyoxyalkylene chain has conventionally been obtained by an urethanization reaction between a polyoxyalkylene polyol and an isocyanate group-containing trialkoxysilane compound by a metal catalyst such as an organic tin compound.

However, when the obtained specific polymer was stored without completely removing the metal catalyst such as an organic tin compound, the catalyst also functions as a curing catalyst for the specific polymer, whereby the storage stability of such a specific polymer was bad, and the viscosity increased.

Further, even when such a catalyst was completely removed from the obtained specific polymer, because of an impurity such as a catalyst or an oxide used for synthesizing a polyoxyalkylene polymer, there was a problem that the longer the storage time, the higher the viscosity of the specific polymer.

Patent Document 1: JP-A-03-072527
Patent Document 2: JP-A-03-047825
Patent Document 3: JP-A-10-245482

### DISCLOSURE OF THE INVENTION

### OBJECT TO BE ACCOMPLISHED BY THE INVENTION

The present invention has an object to provide a polymer composition, whereby it is possible to suppress the viscosity increase of a polymer composition containing a specific polymer having a polyoxyalkylene chain and an alkoxysilyl group bonded to the terminal of the polyoxyalkylene chain via a urethane bond, at the time of storing the polymer composition.

### MEANS TO ACCOMPLISH THE OBJECT

The present inventors have conducted extensive studies, and as a result, they have found a polymer composition, whereby it is possible to suppress the viscosity increase of the polymer composition at the time of storage by blending a specific amount of a specific compound containing a phenolic hydroxyl group. The present invention has been accomplished on the basis of this discovery.

That is, the present invention provides a polymer composition comprising from 0.05 to 10 parts by mass of a compound (O) having a hydroxyl group represented by the following formula (2), per 100 parts by mass of an alkoxysilyl group-containing oxyalkylene polymer (P) having a urethane bond, which is obtained by a urethanization reaction between a polymer (pP) having a polyoxyalkylene chain and a hydroxyl group and a compound (U) having an alkoxysilyl group

and an isocyanate group represented by the following formula (1) :

$$(X^1\text{-})_a(R\text{-})_bSi\text{-}Q^U\text{-}NCO \qquad (1)$$

(wherein each $X^1$ is independently a $C_{1-6}$ alkoxy group, R is a $C_{1-6}$ alkyl group, a is 2 or 3, b is 0 or 1, a+b is 3, and $Q^U$ is a divalent $C_{1-20}$ organic group)

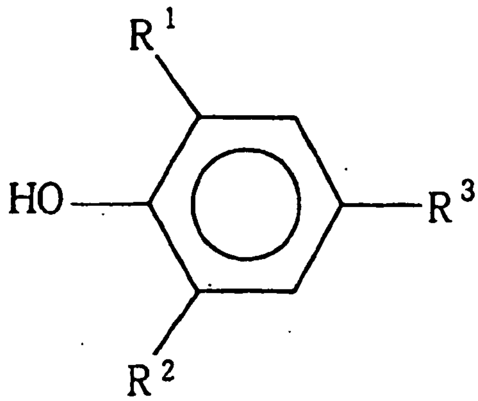

(2)

(wherein each of $R^1$ and $R^2$ is a hydrogen atom or a $C_{1-6}$ saturated hydrocarbon group, at least one of them is a $C_{1-6}$ saturated hydrocarbon group, and $R^3$ is a $C_{2-35}$ hydrocarbon group).

Further, the present invention provides the polymer composition, wherein $R^1$ and $R^2$ of the above compound (O) of the formula (2) are tert-butyl groups.

Further the present invention provides the polymer composition, wherein the above compound (O) is a compound represented by the following formula (3):

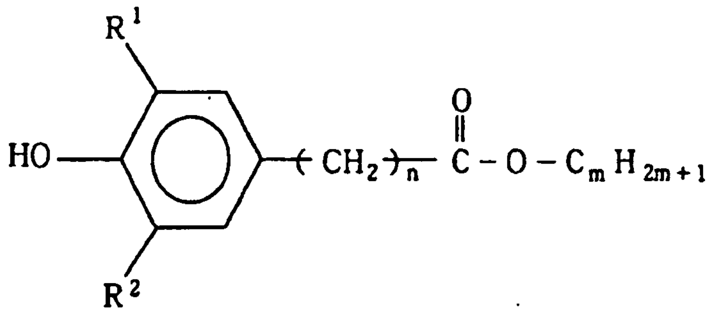

(3)

(wherein each of $R^1$ and $R^2$ is a hydrogen atom or a $C_{1-6}$ saturated hydrocarbon group, at least one of them is a $C_{1-6}$ saturated hydrocarbon group, and n and m are integers which satisfy $1 \leqq n+m \leqq 30$).

Further, the present invention provides the polymer composition, wherein the number average molecular weight per terminal group of the above polymer (P) is at least 5,000.

Further, the present invention provides the polymer composition, wherein the number average molecular weight per terminal group of the above polymer (P) is at least 7,500.

Further, the present invention provides the polymer composition, wherein the above polymer (pP) is obtained by ring-opening polymerization of an alkylene oxide with a compound having an active hydrogen atom in the presence of a double metal cyanide complex catalyst having an organic ligand.

Further, the present invention provides the polymer composition, wherein the double metal cyanide complex catalyst having an organic ligand is used in the urethanization reaction of the above polymer (pP) with compound (U).

Further, the present invention provides the polymer composition, wherein the above polymer (pP) is a polymer containing a polymerized unit of an oxyalkylene formed by ring-opening polymerization of a propylene oxide.

Further, the present invention provides the polymer composition, wherein $X^1$ in the formula (1) for the above polymer (pP) is a methoxy group.

Further, the present invention provides a curable composition containing the above polymer composition and a curing catalyst.

EFFECTS OF THE INVENTION

The polymer composition of the present invention can suppress the viscosity increase during storage to be low and is excellent in curability, and a cured body obtained by curing the polymer composition has excellent physical properties. The polymer composition of the present invention is useful as an adhesive, a sealing material, etc., to be used for various applications.

BEST MODE FOR CARRYING OUT THE INVENTION

In the present specification, the number average molecular weight is shown as Mn, the weight average molecular weight as Mw and the molecular weight distribution as Mw/Mn.

The polymer (pP) used in the polymer composition of the present invention is a polymer having a polyoxyalkylene chain and a hydroxyl group.

The polyoxyalkylene chain in the polymer (pP) is preferably made of a polymerized unit of an oxyalkylene formed by ring-opening polymerization of a $C_{2-6}$ alkylene oxide, more preferably a polymerized unit of an oxyalkylene formed by ring-opening polymerization of at least one alkylene oxide selected from the group consisting of ethylene oxide, propylene oxide, butylene oxide and hexylene oxide, particularly preferably a polymerized unit of an oxyalkylene formed by ring-opening polymerization of propylene oxide. When the polyoxyalkylene chain is made of at least two types of a polymerized unit of an oxyalkylene, the sequence of at least two types of a polymerized unit of an oxyalkylene may be a block-form or a random-form.

A hydroxyl group is preferably one located at the terminal of the polyoxyalkylene chain. Mn per hydroxyl group of the polymer (pP) is preferably from 1,000 to 18,000, particularly preferably from 3,000 to 15,000.

The polymer (pP) is preferably a polymer (pP1) obtained by ring-opening polymerization of an alkylene oxide with a compound having an active hydrogen atom in the presence of the double metal cyanide complex catalyst having an organic ligand (hereinafter referred to as DMC).

The double metal cyanide complex in the double metal cyanide complex having an organic ligand is preferably one having a skeleton of a double metal cyanide complex made of a combination of zinc and cobalt or a combination of zinc and iron, particularly preferably one having a skeleton of zinc hexacyanocobaltate or one having a skeleton of zinc hexacyanoferrate.

The organic ligand is preferably an etheric ligand or an alcoholic ligand. Specific examples of the etheric ligand may be ethylene glycol dimethyl ether (glyme), diethylene glycol dimethyl ether (diglyme) and triethylene glycol dimethyl ether. Specific examples of the alcoholic ligand may be tert-butyl alcohol, n-butyl alcohol, sec-butyl alcohol, iso-butyl alcohol, tert-pentyl alcohol, iso-pentyl alcohol and ethylene glycol mono-tert-butyl ether.

The compound having an active hydrogen atom is preferably an organic compound having an active hydrogen atom, more preferably a compound having a hydroxyl group or an amino group, particularly preferably a compound having from 1 to 6 hydroxyl groups, particularly from 1 to 4 hydroxyl groups.

Specific examples of the organic compound having an active hydrogen atom may be an alcohol such as ethylene glycol, propylene glycol, dipropylene glycol, butanediol, hexamethylene glycol, bisphenol A hydride, neopentyl glycol, polybutadiene glycol, diethylene glycol, triethylene glycol, allyl alcohol, methallyl alcohol, glycerol, trimethylolmethane, trimethylolpropane or pentaerythritol; and a polymer form alcohol such as polyoxypropylene monool, polyoxypropylene diol, polyoxypropylene triol, polyoxyethylene monool, polyoxyethylene diol or polyoxyethylene triol. Mn per hydroxyl group of the polymer form alcohol is preferably from 300 to 2,000.

The compound having an active hydrogen atom may be used alone or in combination of two or more of such compounds. When at least two compounds having an active hydrogen atom are used, it is preferred to use a polymer form alcohol having two hydroxyl groups and a polymer form alcohol having 3 hydroxyl groups.

The polymerization temperature when the polymer (pP1) is produced, may be suitably selected, but it is usually preferably from 80 to 150°C.

In the present invention, it is possible to use one type of the polymer (pP) or two or more types of the polymer (pP).

A compound (U) to be used in the present invention is a compound having an alkoxysilyl group and an isocyanate group, preferably a compound represented by the following formula (1) :

$$(X^1\text{-})_a(R\text{-})_bSi\text{-}Q^U\text{-}NCO \qquad (1)$$

wherein each $X^1$ is independently a $C_{1-6}$ alkoxy group, R is a $C_{1-6}$ alkyl group, a is 2 or 3, b is 0 or 1, a+b is 3, and $Q^U$ is a divalent $C_{1-20}$ organic group.

In the formula (1), $X^1$ is preferably a methoxy group, an ethoxy group, a propoxy group, a butoxy group, a pentyloxy group or a hexyloxy group, particularly preferably a methoxy group. In the formula (1), 2 or 3 $X^1$s may be the same group or different groups, and they are preferably the same group. a is preferably 3.

In the formula (1), $Q^U$ is a divalent $C_{1-20}$ organic group.

Such a divalent organic group is preferably a $C_{1-14}$ alkylene group, more preferably a $C_{1-10}$ alkylene group, particularly preferably a $C_{1-5}$ alkylene group.

The divalent organic group is particularly preferably a trimethylene group or a methylene group.

Specific examples of the compound (U) may be 1-isocyanate methyl trimethoxysilane, 2-isocyanate ethyl trimethoxysilane, 3-isocyanate propyl trimethoxysilane, 3-isocyanate butyl trimethoxysilane, 3-isocyanate pentyl trimethoxysilane, 1-isocyanate methyl triethoxysilane, 2-isocyanate ethyl triethoxysilane, 3-isocyanate propyl triethoxysilane, 3-isocyanate butyl triethoxysilane, 3-isocyanate pentyl triethoxysilane, 1-isocyanate propyl trimethoxysilane, 1-isocyanate methyl dimethoxymethylsilane and 1-isocyanate propyl triethoxysilane. 3-Isocyanate propyl trimethoxysilane or 1-isocyanate methyl dimethoxymethylsilane is preferred, and 3-isocyanate propyl trimethoxysilane is particularly preferred.

In the present invention, it is preferred to use a catalyst for a urethanization reaction between the polymer (pP) and compound (U). The catalyst may, for example, be an organic tin compound (e.g. dibutyltin dilaurate or dioctyltin dilaurate), a metal catalyst such as a bismuth compound or a basic catalyst such as an organic amine. Further, as the catalyst, the DMC catalyst may be mentioned. Among such catalysts, the DMC catalyst is preferred. In a case where the polymer (pP) is produced by using the DMC catalyst, if the DMC catalyst is still present therein afterwards, the urethanization reaction can be carried out without adding other catalysts. In such a case, since a tin catalyst, or the like, is not added, the storage stability of the final product is good, and there is an effect of suppressing the viscosity increase of the polymer composition during storage to be low, such being desirable.

In the urethanization reaction, the double metal cyanide complex having an organic ligand to be used as a catalyst, is preferably in an activated state so that the polymer (pP) and the compound (U) can undergo the urethanization reaction.

The double metal cyanide complex catalyst having an organic ligand in an activated state may, for example, be a double metal cyanide complex having an organic ligand in a state where the alkylene oxide is subjected to ring-opening polymerization with the compound having an activated hydrogen atom in the presence of the double metal cyanide complex having an organic ligand, or a double metal cyanide complex having an organic ligand in a similar state. In such a case, the double metal cyanide complex having an organic ligand may be one immediately after the initiation of the ring-opening polymerization reaction of the alkylene oxide, one in the middle of the polymerization reaction or one after completion of the ring-opening the polymerization reaction.

In a case where the polymer (pP1) and the compound (U) are subjected to a urethanization reaction without purifying or removing the DMC catalyst used to produce the polymer (pP), which is contained in the polymer (pP1) obtained by ring-polymerization of an alkylene oxide with a compound having an active hydrogen atom in the presence of the DMC catalyst, there is an effect that the urethanization reaction efficiently proceeds. Polymers (pP1) containing the DMC catalyst used to produce the polymers (pP1) may be used alone or in combination as a mixture of two or more of them.

When the polymers (pP1) containing the double metal cyanide complex catalyst having an organic ligand which is used to produce the polymers (pP1), are used in combination as a mixture of two or more of them, it is possible to adjust the amount of the double metal cyanide complex catalyst having an organic ligand, to be contained.

The amount of the catalyst to be used during the urethanization reaction of the polymer (pP) with the compound (U) is preferably from 5 to 500 ppm, more preferably from 10 to 200 ppm, particularly preferably from 20 to 100 ppm, based on the polymer (pP). When it is added in an amount of more than 500 ppm, the long-term storage stability of the polymer itself will decrease, and when it is added in an amount of less than 5 ppm, the urethanization reaction will hardly proceed.

When the double metal cyanide complex catalyst having an organic ligand is used as a catalyst during the urethanization reaction, the amount of the double metal cyanide complex catalyst having an organic ligand to be used is preferably an amount where the urethanization reaction takes place, and it is preferably from 5 to 500 ppm, more preferably from 5 to 200 ppm, further preferably from 8 to 100 ppm, particularly preferably from 10 to 80 ppm, as calculated as a metal amount, based on the mass of the polyme (pP).

The ratio of total number of isocyanate groups of the compound (U) to the total number of hydroxyl groups of the polymer (pP) (isocyanate groups/hydroxyl groups) is preferably from 0.80 to 1.05, particularly preferably from 0.85 to 1.00. In such a range, there is an effect that the rapid curing property and storage stability of the polymer composition containing the polymer (P) will be remarkably improved. The reason is not necessarily apparent, but in such a range, even if hydroxyl groups remain in the obtained polymer (P), the number of the hydroxyl groups is small, whereby the number of an alcohol exchange reaction with alkoxysilyl groups is small. Thus, the storage stability of the polymer (P) and the rapid curing property of the polymer (P) after the storage can be maintained. Further, a side reaction in the urethanization reaction (an allophanate-forming reaction, an isocyanurate-forming reaction, etc.) is suppressed, whereby it is considered that a byproduct is hardly formed, and the viscosity of the curable composition hardly increases.

The temperature for the reaction is preferably from 20 to 200°C, more preferably from 50 to 150°C, particularly

preferably from 50 to 120°C. Further, the urethanization reaction is preferably carried out under an atmosphere of an inert gas (a nitrogen gas is preferred).

According to the above process, it is possible to produce an alkoxysilyl group-containing oxyalkylene polymer (P) having a urethane bond. Such a polymer (P) has curing property and has the following formula (4) and a polyoxyalkylene chain:

$$(X^1\text{-})_a(R\text{-})_bSi\text{-}Q^U\text{-}NHCOO\text{-} \qquad (4)$$

(wherein each $X^1$ is independently a $C_{1-6}$ alkoxy group, R is a $C_{1-6}$ alkyl group, a is 2 or 3, b is 0 or 1, a+b is 3, and $Q^U$ is a divalent $C_{1-20}$ organic group).

The polymer (P) obtained by the urethanization reaction can be formed into the polymer composition of the present invention with or without separation and removal of a urethane-forming catalyst.

In the present invention, the alkoxysilyl group-containing oxyalkylene polymer (P) having a urethane bond preferably has a large Mn per alkoxysilyl group of the polymer so that the viscosity increase during storage can be suppressed to be low. Mn per alkoxysilyl group of the polymer is preferably at least 3,000, more preferably at least 5,000, further preferably at least 7,500, particularly preferably at least 8,500. Further, Mn per alkoxysilyl group of the polymer is preferably at most 20,000, particularly preferably at most 15,000.

The present invention provides a polymer composition containing the polymer (P) obtained by the above process and the compound (O) having a hydroxyl group.

The compound (O) having a hydroxyl group is a compound having a hydroxyl group represented by the formula (2), and it is a compound having a phenolic hydroxyl group per molecule. In the formula (2), each of $R^1$ and $R^2$ is a hydrogen atom or a $C_{1-6}$ saturated hydrocarbon group, at least one of them is a $C_{1-6}$ saturated hydrocarbon group, and preferably both of them are $C_{1-6}$ saturated hydrocarbon groups. The $C_{1-6}$ saturated hydrocarbon group is preferably a $C_{1-6}$ alkyl group, more preferably a $C_{3-5}$ alkyl group. Such an alkyl group is preferably a branched one, particularly preferably a tert-butyl group.

In the formula (2), $R^3$ is a $C_{2-35}$ hydrocarbon group which may contain an ester bond, and it may be a $C_{2-35}$ hydrocarbon group not containing an ester bond but is preferably a $C_{2-35}$ hydrocarbon group having an ester bond. It is particularly preferably a $C_{2-35}$ aliphatic hydrocarbon group having an ester bond. With respect to an aliphatic hydrocarbon group having an ester bond, the ester bond is preferably present in the middle part of the aliphatic hydrocarbon group, particularly preferably present in the middle part of the aliphatic hydrocarbon group so that the ester bond is bonded to the phenyl group via a $C_{1-5}$ alkylene group. As the ester bond, a bonding group represented by -C(=O)O- may be mentioned.

The number of carbon atoms of the aliphatic hydrocarbon group is from 2 to 35, preferably from 3 to 32, particularly preferably from 4 to 30.

The compound (O) having a hydroxyl group is preferably a compound represented by the following formula (3):

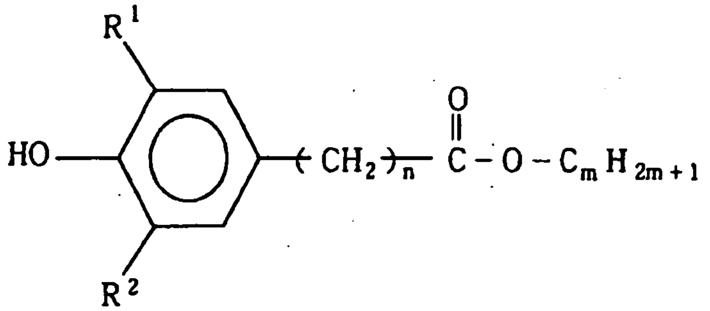 (3)

(wherein each of $R^1$ and $R^2$ is a hydrogen atom or a $C_{1-6}$ saturated hydrocarbon group, at least one of them is a $C_{1-6}$ saturated hydrocarbon group, and n and m are integers which satisfy $1 \leqq n+m \leqq 30$).

Each of $R^1$ and $R^2$ in the formula (3) is the same as one in the formula (2), and the preferred one is also the same n is an integer of preferably from 1 to 3, particularly preferably 2, m is preferably an integer of from 1 to 26, more preferably an integer of from 1 to 20, particularly preferably an integer of from 4 to 18.

$C_mH_{2m+1}$ may be linear or branched.

In the polymer composition of the present invention, the content of the compound (O) having a hydroxy group is from 0.05 to 10 parts by mass, preferably from 0.1 to 8 parts by mass, more preferably from 0.1 to 5 parts by mass, particularly preferably from 0.1 to 3 parts by mass, per 100 parts by mass of the alkoxysilyl group-containing oxyalkylene polymer (P) having a urethane bond. If the content of the compound (O) having a hydroxy group is less than 0.05 part by mass, the viscosity increase during storage will be large, and if it exceeds 10 parts by mass, no effect comparable

to the amount will be obtained, and the curing will slow down.

The polymer composition of the present invention can be produced by mixing the above compound having a hydroxy group in the above content with the polymer (P).

The mixing temperature of the polymer (P) with the compound (O) having a hydroxy group has no particular restriction, but it is preferably from 40 to 120°C, more preferably from 50 to 100°C, particularly preferably from 50 to 95°C.

The amount of moisture in the polymer composition is preferably suppressed to be low, and it is preferably at most 800 ppm, more preferably at most 500 ppm, particularly preferably at most 300 ppm. The lower limit value of the moisture amount in the polymer composition is preferably at least 1 ppm.

Further, the compound (O) having a hydroxy group is kept not to let moisture get in. The polymer composition of the present invention can suppress increase of the viscosity of the polymer (P).

After the storage at 50°C for 4 weeks, the viscosity increase of the polymer (P) is preferably at most 4%, more preferably at most 3%, particularly preferably at most 2.5%. Further, after the storage at 70°C for 4 weeks, the viscosity increase of the polymer (P) is preferably at most 70%, more preferably at most 65%, particularly preferably at most 60%.

When the polymer composition of the present invention is to be cured, it can be made to be a curable composition by incorporating a curing catalyst.

Such a curing catalyst is not particularly limited as long as it is a compound to catalyze a crosslinking reaction by a hydrolysis reaction of alkoxysilyl groups of the polymer (P). Specific examples of the curing catalyst may be an organic tin compound, an organic metal compound containing a metal other than tin, a metal organic alkoxide, a complex containing a metal other than tin, an organic amine and other catalysts.

Specific examples of the organic tin compound may be an organic tin carboxylate such as dibutyltin diacetate, dibutyltin dilaurate, dioctyltin dilaurate, $(n-C_4H_9)_2Sn(OCOCH=CHCOOCH_3)_2$, $(n-C_4H_9)_2Sn$ (OCOCH=CHCOO $(n-C_4H_9))_2$, $(n-C_8H_{17})_2Sn(OCOCH=CHCOOCH_3)_2$, $(n-C_8H_{17})_2Sn(OCOCH=CHCOO(n-C_4H_9))_2$ or $(n-C_8H_{17})_2Sn$ $(OCOCH=CHCOO(iso-C_8H_{17}))_2$ i an organic tin compound containing a sulfur atom such as $(n-C_4H_9)_2Sn(SCH_2COO)$, $(n-C_8H_{17})_2Sn(SCH_2COO)$, $(n-C_8H_{17})_2Sn(SCH_2CH_2COO)$, $(n-C_8H_{17})_2Sn(SCH_2COOCH_2CH_2OCOCH_2S)$, $(n-C_4H_9)_2Sn$ $(SCH_2COO(iso-C_8H_{17}))_2$, $(n-C_8H_{17})_2Sn(SCH_2COO(iso-C_8H_{17}))_2$, $(n-C_8H_{17})_2Sn$ $(SCH_2COO(n-C_8H_{17}))_2$ or $(n-C_4H_9)_2SnS$, $(C_8H_{17})_2Sn(SCH_2COOC_8H_{17})_2$; an organic tin oxide compound such as $(n-C_4H_9)_2SnO$ or $(n-C_8H_{17})_2SnO$; a reaction product obtained by reacting an organic tin oxide with an ester (e.g. ethyl silicate, dimethyl meleate, diethyl maleate, dioctyl maleate, dimethyl phthalate, diethyl phthalate, dioctyl phthalate); a chelate of an organic tin compound such as $(n-C_4H_9)_2Sn(acac)_2$, $(n-C_8H_{17})_2Sn(acac)_2$, $(n-C_4H_9)_2Sn$ $(OC_8H_{17})$ (acac), $(n-C_4H_9)_2Sn$ $(etac)_2$, $(n-C_8H_{17})_2Sn$ $(etac)_2$, $(n-C_4H_9)_2Sn(OC_8H_{17})$ (etac) or tin bisacetyl acetonate; a reaction product obtained by reacting a chelate of an organic tin compound with an alkoxysilane (tetramethoxysilane, tetraethoxysilane, tetrapropoxysilane, etc.); an organic tin compound having a -SnOSn- bond such as $(n-C_4H_9)_2(CH_3COO)SnOSn(OCOCH_3)$ $(n-C_4H_9)_2$ or $(n-C_4H_9)_2(CH_3O)$ $SnOSn(OCH_3)$ $(n-C_4H_9)_2$ ; and a divalent tin carboxylate such as tin 2-ethylhexanoate, tin n-octylate, tin naphthanate or tin stearate. Here, acac is an acetylacetonate ligand, and etac is am ethyl acetoacetate ligand (the same applies hereinafter).

Specific examples of an organic metal compound containing a metal other than tin may be calcium carboxylate, zirconium carboxylate, iron carboxylate, vanadium carboxylate, bismuth carboxylate such as bismuth tris-2-ethyl hexoate, lead carboxylate, titanium carboxylate and nickel carboxylate.

Specific examples of an organic metal alkoxide may be a titanium alkoxide such as tetraisopropyl titanate, tetrabutyl titanate, tetramethyl titanate or tetra(2-ethylhexyl titanate) ; an aluminum alkoxide such as aluminum isopropylate or mono-sec-butoxyaluminum diisopropylate; a zirconium alkoxide such as zirconium-n-propylate or zirconium-n-butyrate; and a titanium alkoxide such as titanium tetraacetylacetonate, titanium ethylacetoacetate, titanium octylene glycolate or titanium lactate.

Specific examples of the compound containing a metal other than tin may be an aluminum chelate such as aluminum trisacetylacetonate, aluminum trisethylacetoacetate or diisopropoxyaluminum ethylacetoacetate; and a zirconium chelate such as zirconium tetraacetylacetonate, zirconium bisacetylacetonate, zirconium acetylacetonate bisethylacetoacetate or zirconium acetate.

Specific examples of an organic amine may be an aliphatic monoamine such as butylamine, hexylamine, octylamine, decylamine or laurylamine; an aliphatic diamine such as ethylenediamine or hexanediamine; an aliphatic polyamine such as triethylamine, diethylene triamine, triethylene tetramine or tetraethylenepentamine; a heterocyclic amine such as piperidine or piperazine; an aromatic amine such as methaphenylenediamine; an alkanolamine such as monoethanolamine, diethanolamine or triethanolamine; and various modified amines to be used for curing an epoxy resin.

Specific examples of other curing catalysts may be phosphoric acid, p-toluene sulfonic acid and phthalic acid.

The curing catalyst is preferably an organic tin compound from the viewpoint of handling efficiency. From the viewpoint of rapid curing property, it is particularly preferably $(n-C_4H_9)_2Sn(acac)_2$, $(n-C_8H_{17})^2Sn(acac)_2$, $(n-C_4H_9)_2Sn$ $(OC_8H_{17})$ (acac), $(n-C_4H_9)_2Sn(etac)_2$ or $(n-C_8H_{27})_2Sn(etac)_2$.

Further, by properly selecting the curing catalyst, it is possible to control the curing rate of the curable composition. For example, by selecting a catalyst having a low activity as a curing catalyst, it is possible to lower the curing

rate of the curable composition of the present invention.

A specific example of the catalyst having a low activity may be a specific organic tin compound containing a sulfur atom in a ligand (e.g. tradename: UL-29, manufactured by Crompton Corporation or tradename: Neostann U-860 manufactured by Nitto Kasei Co., Ltd.).

The curable composition may contain one type of curing catalyst or two types or more of curing catalysts. When two types or more of curing catalysts are contained, since the curable composition of the present invention is excellent in curing property, an organic tin compound and an organic amine are preferably contained.

The curable composition preferably contains from 0.001 to 10 parts by mass of the curing catalyst, based on 100 parts by mass of the polymer (P). In such a case, there are effects that the curing rate is high, that foaming at the time of curing is suppressed, and further that the durability of the cured product is excellent.

The curable composition may further contain at least one additive selected from the group consisting of a filler, a plasticizer, an adhesion-imparting agent, a solvent, a dehydrating agent, a thixotropy-imparting agent, an age resistor and a pigment.

Specific examples of the filler in the present invention may be calcium carbonate, silica, silicic anhydride, carbon black, magnesium carbonate, diatomaceous earth, clay, talc, titanium oxide, bentonite, ferric oxide, zinc oxide, charcoal, pulp, a cotton chip, mica, a walnut shell powder and a rice hull powder. The filler may be a fine powder or a tiny hollow body (e.g. a silica balloon, a silas balloon, a glass balloon or a resin balloon). The curable composition of the present invention may contain one type of the filler or two or more types of the fillers.

Calcium carbonate is preferably a calcium carbonate having the surface treated with an aliphatic acid or a resin acid. Calcium carbonate is preferably colloidal calcium carbonate having an average particle size of at most 1 $\mu$m, light calcium carbonate having an average particle size of from 1 to 3 $\mu$m or heavy calcium carbonate having an average particle size of from 1 to 20 $\mu$m.

The curable composition contains a filler in an amount of preferably at most 1,000 parts by mass, particularly preferably from 50 to 250 parts by mass, based on 100 parts by mass of the polymer (P).

The plasticizer in the present invention may, for example, be a phthalate such as dioctyl phthalate, dibutyl phthalate or butyl benzyl phthalate; an aliphatic carboxylate such as dioctyl adipate, bis(2-methylnonyl) succinate, dibutyl sebacate or butyl oleate; an alcohol ester such as pentaerythritol ester; a phosphate such as trioctyl phosphate or tricresyl phosphate; an epoxy plasticizer such as dioctyl 4,5-epoxyhexahydro phthalate or benzyl epoxy stearate; chlorinated paraffin; a polyester plasticizer obtained by reacting a dibasic acid with a divalent alcohol; a polyether plasticizer such as polyoxypropylene glycol; a styrene plasticizer such as poly-$\alpha$-methylstyrene or polystyrene; or a polymer plasticizer such as polybutadiene, a butadiene/acrylonitrile copolymer, polychloroprene, polyisopurene, polybutene, hydrogenated polybutene or an epoxidized polybutadiene.

Specific examples of the adhesion-imparting agent in the present invention may be an organic silane coupling agent such as silane having a (meth)acryloyloxy group, silane having an amino group, silane having an epoxy group or silane having a carboxyl group; an organic metal coupling agent such as isopropyltri(N-aminoethyl-aminoethyl)propyltrimethoxytitanate or 3-mercaptopropyltrimethoxytitanate; and an epoxy resin.

Specific examples of the silane having a (meth)acryloyloxy group may be 3-methacryloyloxypropyl trimethoxysilane, 3-acryloyloxypropyl trimethoxysilane and 3-methacryloyloxypropyl methyl dimethoxysilane.

Specific examples of the silane having an amino group may be 3-aminopropyl trimethoxysilane, 3-aminopropyl triethoxysilane, 3-aminopropyl methyl dimethoxysilane, N-(2-aminoethyl)-3-aminopropyl trimethoxysilane, N-(2-aminoethyl)-3-aminopropyl methyl dimethoxysilane, N-(2-aminoethyl)-3-aminopropyl triethoxysilane, 3-ureidopropyl triethoxysilane, N-(N-vinylbenzyl-2-aminoethyl)-3-aminopropyl trimethoxysilane and 3-anilinopropyl trimethoxysilane.

Specific examples of the silane having an epoxy group may be 3-glycidyl oxypropyl trimethoxysilane, 3-glycidyl oxypropyl methyl dimethoxysilane and 3-glycidyl oxypropyl triethoxysilane.

Specific examples of the silane having a carboxy group may be 2-carboxyethyl triethoxysilane, 2-carboxyethyl phenylbis(2-methoxyethoxy)silane and N-(N-carboxylmethyl-2-aminoethyl)-3-aminopropyl trimethoxysilane.

Further, it is possible to use a reaction product obtained by reacting at least two types of silane coupling agents. The reaction product may be a reaction product obtained by reacting a silane having an amino group with a silane having an epoxy group, a reaction product obtained by reacting a silane having an amino group with a silane having a (meth) acryloyloxy group, a reaction product obtained by reacting a silane having an epoxy group with a silane having a mercapto group, or a reaction product of a silane having various mercapto groups.

Specific examples of the epoxy resin may be a bisphenol A-diglycidyl ether type epoxy resin, a bisphenol F-diglycidyl ether type epoxy resin, a tetrabromobisphenol A-glycidyl ether type epoxy resin, a novolac type epoxy resin, a hydrogenated bisphenol A type epoxy resin, a glycidyl ether type epoxy resin of a bisphenol A-propylene oxide adduct, glycidyl 4-glycidyl oxy benzoate, diglycidyl phthalate, diglycidyl tetrahydro phthalate, diglycidyl hexahydro phthalate, a diglycidyl ester type epoxy resin, an m-aminophenol type epoxy resin, a diaminodiphenylmethane type epoxy resin, a urethane modified epoxy resin, N,N-diglycidyl aniline, N,N-diglycidyl-o-toluidine, triglycidyl isocyanurate, polyalkylene glycol diglycidyl ether, glycidyl ether of a polyhydric alcohol (e.g. glycerol), a hydantoin type epoxy resin and an unsaturated

polymer epoxy resin (a petroleum resin).

When the curable composition contains the above silane coupling agent, the silane coupling agent is preferably contained in an amount of more than 0 to 30 parts by mass, based on 100 parts by mass of the polymer (P). When the curable composition of the present invention contains the above epoxy resin, the epoxy resin is preferably contained in an amount of at most 100 parts by mass based on 100 parts by mass of the polymer (P).

Specific examples of the solvent in the present invention may be an aliphatic hydrocarbon, aromatic hydrocarbon, halogenated hydrocarbon, alcohol, ketone, ester, ether, ester alcohol, ketone alcohol, ether alcohol, ketone ether, ketone ester and ester ether. When an alcohol is used, the preservation stability of the curable composition will be improved. The alcohol is preferably a $C_{1-10}$ alkyl alcohol, more preferably, methanol, ethanol, isopropanol, isopentyl alcohol or hexyl alcohol, particularly preferably methanol or ethanol.

When the curable composition contains a solvent, the solvent is preferably contained in an amount of at most 500 parts by mass based on 100 parts by mass of the polymer (P).

Specific examples of the dehydrating agent in the present invention may be a trialkyl orthoformate such as trimethyl orthoformate, a triethyl orthoformate, tripropyl orthoformate or tributyl orthoformate; and a trialkyl orthoacetate such as trimethyl orthoacetate, triethyl orthoacetate, tripropyl orthoacetate or tributyl orthoacetate.

When the curable composition contains the dehydrating agent, the dehydrating agent is preferably contained in an amount of from 0.001 to 30 parts by mass based on 100 parts by mass of the polymer (P).

Specific examples of the thixotropy-imparting agent in the present invention may be a hydrogenated castor oil and a fatty acid amide.

Specific examples of the age resister in the present invention may be an antioxidant for a polyurethane resin, an ultraviolet absorber and a light stabilizer. Specific examples of the age resister may be age resisters of a hindered amine type, a benzotriazole type, a benzophenone type, a benzoate type, a cyanoacrylate type, an acrylate type, a hindered phenol type, a phosphorus type and a sulfur type.

Specific examples of the pigment in the present invention may be an inorganic pigment such as ferric oxide, chrome oxide or titanium oxide; and an organic pigment such as phthalocyanine blue or phthalocyanine green.

A method for producing the curable composition is not particularly limited. For example, when 100 parts by mass of the polymer (P) and the above curing catalyst, filler, adhesion-imparting agent, solvent, thixotropy-imparting agent, age resister and pigment (hereinafter referred to as other components) are contained, the order of blending other components is not particularly limited, but it is preferred that the curing catalyst is mixed after mixing the curable composition of the present invention with other components other than the curing catalyst.

Further, a method for curing the curable composition is not particularly limited, and it is preferred to use a method for curing a one-pack type curable composition wherein the curable composition of the present invention and desired other components are mixed, and the mixture is sealed and preserved, and the curable composition is cured by moisture in air at the time of use, or a method for curing a two-pack type curable composition wherein the curable composition of the present invention and desired other components are mixed at the time of use, and the mixture is properly cured.

The curable composition has high curing property and is capable of forming a cured product having suitable mechanical properties. The curable composition of the present invention is useful as a sealant for construction, a water proof material, an adhesion or a coating agent as a curable composition for covering and sealing, particularly useful as an adhesive.

A preferred usage mode of an adhesion made of the curable composition of the present invention is a one-pack type curable adhesive wherein the curable composition of the present invention and desired other components are mixed, and the mixture is sealed and preserved, and the adhesive is cured by moisture in air at the time of use, or a two-pack type curing type adhesive wherein the curable composition of the present invention and desired other components are mixed to cured at the time of use.

EXAMPLES

Now, the present invention will be described in further detail with reference to Examples, but it should be understood that the present invention is by no means restricted thereto.

The ratio of the total amount of isocyanate groups of the compound (U) to the total amount of hydroxyl groups of the polymer (pP) is referred to as NCO/OH. The total amount of hydroxyl groups of the polymer (pP) is calculated by hydroxyl group values (mgKOH/g) measured in accordance with JIS K1557 6.4.

The molecular weight and molecular weight distribution were measured by a gel permeation chromatography method (standard: polystyrene).

For the measurement of moisture amount, a coulometric moisture meter (model CA-06/Ver 5.0) manufactured by Mitsubishi Kasei Corporation (current Dia Instruments Co., Ltd.) was used. As an anolyte, aquamicron AS (manufactured by API Corporation) was used, and as a catholyte, aquamicron CXU (manufactured by API Corporation) was

used. The amount of a sample collected for the measurement is adjusted depending on the moisture content of the sample, and the proper amount in a range of from 0.1 g to 10 g was used. The measurement was carried out 5 times, and an average value of three points except for the maximum and minimum values, was taken as the measurement value.

In the measurement of viscosity, the viscosity (25°C) of the polymer composition before heating was measured by an E-type viscometer and was referred to as an initial viscosity, and in an oven adjusted to a constant temperature of 50°C or 70°C, such a polymer composition was kept and stored in a state where it was filled in a glass bottle sealed by flushing with nitrogen. The viscosity (25°C) of the polymer composition after 1 week, 2 weeks, 3 weeks and 4 weeks was measured by an E-type viscometer, and the viscosity increase after 4 weeks was calculated by the following formula:

$$\text{Viscosity increase (\%)} = \{(\text{viscosity after storage for 4 weeks} - \text{initial viscosity})/\text{initial viscosity}\} \times 100$$

PRODUCTION EXAMPLE 1

PRODUCTION OF POLYMER (P-1)

In a pressure-proof reactor (capacity: 5 L), in the presence of 960 mg of zinc hexacyanocobaltate having glyme as a ligand, 4,500 g of propylene oxide was subjected to ring-opening polymerization with 300 g of polyoxypropylene diol (Mn: 1000) to obtain polyoxyalkylene diol (Mn: 16,000, hydroxyl value: 7.4) (polymer (pP-1)). Then, the inner temperature was set to be at 105°C, and dehydration under reduced pressure was carried out until the moisture amount became at most 50 ppm. The remaining double metal cyanide complex catalyst consisted of 21.5 ppm of zinc and 9.2 ppm of cobalt.

Then, inside of the reactor was flushed with nitrogen gas, and while keeping the inner temperature at 50°C, 132.3 g of 3-isocyanate propyl trimethoxysilane (compound (U-1), purity: 95%) was added therein so that NCO/OH became 0.97, and the temperature was increased to 80°C, followed by a reaction with stirring for 8 hours. The reaction product was analyzed by Fourier transform infrared spectrophotometer, and the termination of the reaction between hydroxyl groups and isocyanate groups was confirmed. As a result of analyzing the content of the reactor, formation of a urethane bond, a polyoxypropylene chain and a polymer having a trimethoxysilyl group (Mn: 16,000, Mw/Mn: 1.3, polymer (P-1)) were confirmed.

PRODUCTION EXAMPLE 2

PRODUCTION OF POLYMER (P-2)

In a pressure-proof reactor (capacity: 5 L), in the presence of 900 mg of zinc hexacyanocobaltate having glyme as a ligand, 4,250 g of propylene oxide was subjected to ring-opening polymerization with 250 g of polyoxypropylene diol (Mn: 1000) to obtain polyoxyalkylene diol (Mn: 18,000, hydroxyl value: 6.2) (polymer (pP-2)). Then, the inner temperature was set to be at 105°C, and dehydration under reduced pressure was carried out until the moisture amount became at most 50 ppm. The remaining double metal cyanide complex catalyst consisted of 20.5 ppm of zinc and 8.8 ppm of cobalt.

Then, inside of the reactor was flushed with nitrogen gas, and while keeping the inner temperature at 50°C, 104 g of the compound (U-1) was added therein so that NCO/OH became 0.97, and the temperature was increased to 80°C, followed by a reaction with stirring for 8 hours. The reaction product was analyzed by Fourier transform infrared spectrophotometer, and the termination of the reaction between hydroxy groups and isocyanate groups was confirmed. As a result of analyzing the content of the reactor, formation of a urethane bond, a polyoxypropylene chain and a polymer having a trimethoxysilyl group (Mn: 18,000, Mw/Mn: 1.34, polymer (P-2)) were confirmed.

EXAMPLE 1

To 100 parts by mass of the polymer (P-1) obtained in the above Production Example 1, 0.5 part by mass of 6-methylheptyl-3-(3,5-di-tert-butyl-4-hydroxyphenyl)propionate (manufactured by Ciba Specialty Chemicals K.K., product name "IRGANOX 1135", including one wherein a 6-methylheptyl group is substituted by a $C_7$ alkyl group having a side chain or a $C_9$ alkyl group having a side chain) as a compound (O-1) was added, followed by stirring at 90°C for 1 hour to obtain a polymer composition having the compound (O-1) uniformly dispersed and dissolved therein. The moisture amount in such a polymer composition was 80 ppm. The initial viscosity and each viscosity after storage for 1 to 4 weeks of such a polymer composition were measured. The results are shown in Table 1.

EXAMPLE 2

A polymer composition was obtained in the same manner as in Example 1 except that in Example 1, instead of the compound (O-1), 0.5 part by mass of octadecyl-3-(3,5-di-tert-butyl-4-hydroxyphenyl)propionate (manufactured by Ciba Specialty Chemicals K.K., product name "IRGANOX 1076") as a compound (O-2) was used. The moisture amount in such a polymer composition was 90 ppm.

The initial viscosity and each viscosity after storage for 1 to 4 weeks of such a polymer composition were measured. The results are shown in Table 1.

EXAMPLE 3

A polymer composition was obtained in the same manner as in Example 2 except that in Example 2, instead of the polymer (P-1), a polymer (P-2) was used.

The initial viscosity and each viscosity after storage for 1 to 4 weeks of such a polymer composition were measured. The results are shown in Table 1.

COMPARATIVE EXAMPLE 1

A polymer composition was obtained in the same manner as in Example 1 except that in Example 1, instead of the compound (O-1), 0.5 part by mass of pentaerythritol tetrakis{3-(3,5-di-tert-butyl-4-hydroxyphenyl)propionate} (manufactured by Ciba Specialty Chemicals K.K., product name "IRGANOX 1010") was used.

The initial viscosity and each viscosity after storage for 1 to 4 weeks of such a polymer composition were measured. The results are shown in Table 1.

COMPARATIVE EXAMPLE 2

A polymer composition was obtained in the same manner as in Example 1 except that in Example 1, instead of the compound (O-1), 0.5 part by mass of ethylenebis(oxyethylene)bis{3-(5-tert-butyl-4-hydroxy-m-tolyl)propionate} (manufactured by Ciba Specialty Chemicals K.K., product name "IRGANOX 245") was used.

The initial viscosity and each viscosity after storage for 1 to 4 weeks of such a polymer composition were measured. The results are shown in Table 1.

EXAMPLE 3

A polymer composition was obtained in the same manner as in Example 1 except that in Example 1, the compound (O-1) was not added.

The initial viscosity and each viscosity after storage for 1 to 4 weeks of such a polymer composition were measured. The results are shown in Table 1.

TABLE 1

| | | Ex. 1 | Ex. 2 | Ex. 3 | Comp. Ex. 1 | Comp. Ex. 2 | Comp. Ex. 3 |
|---|---|---|---|---|---|---|---|
| Composition ratio (Parts by mass) | Polymer (P-1) | 100 | 100 | | 100 | 100 | 100 |
| | Polymer (P-2) | | | 100 | | | |
| | Compound (O-1) | 0.5 | | | | | |
| | Compound (O-2) | | 0.5 | 0.5 | | | |
| | IRGANOX 1010 | | | | 0.5 | | |
| | IRGANOX 245 | | | | | 0.5 | |
| Initial viscosity (Pa·s/25°C) | | 20.0 | 20.0 | 30.0 | 20.4 | 19.9 | 20.0 |
| Viscosity (Pa·s/ 25°C) | 50°C· after 1 week | 20.0 | 20.1 | 30.0 | 20.9 | 20.3 | 20.0 |
| | 50°C· after 2 weeks | 20.3 | 20.1 | 30.1 | 21.6 | 20.5 | 20.2 |
| | 50°C· after 3 weeks | 20.1 | 20.3 | 30.3 | 21.8 | 20.9 | 20.8 |
| | 50°C· after 4 weeks | 20.2 | 20.4 | 30.5 | 22.0 | 21.3 | 21.1 |

(continued)

| | | Ex. 1 | Ex. 2 | Ex. 3 | Comp. Ex. 1 | Comp. Ex. 2 | Comp. Ex. 3 |
|---|---|---|---|---|---|---|---|
| Viscosity increase at 50°C after 4 weeks (%) | | 1.0 | 2.0 | 1.7 | 7.8 | 7.0 | 5.5 |
| Viscosity (Pa·s/ 25°C) | 70°C· after 1 week | 20.4 | 20.6 | 30.6 | 22.9 | 21.2 | 21.3 |
| | 70°C· after 2 weeks | 22.5 | 22.8 | 33.1 | 27.5 | 25.6 | 25.1 |
| | 70°C· after 3 weeks | 26.0 | 27.0 | 38.4 | 33.2 | 30.2 | 29.9 |
| | 70°C· after 4 weeks | 31.0 | 32.6 | 42.0 | 43.1 | 39.8 | 36.0 |
| Viscosity increase at 70°C after 4 weeks (%) | | 55 | 63 | 40 | 112 | 100 | 80 |

In Examples 1 to 3, wherein the compound (O-1) or the compound (O-2), having a structure represented by the formula (2) or the formula (3) is used, the viscosity increase at 50°C after 4 weeks is lower by from 2.8 to 7.8 times, and the viscosity increase at 70°C after 4 weeks is lower by about 2 to 3 times, as compared with Comparative Examples 1 and 2 wherein IRGANOX 1010 or IRGANOX 245, which does not have a structure represented by the formula (2) or the formula (3), is used as an antioxidizing agent, which means the viscosity increase is remarkably low. Further, it is remarkably low also when compared with Comparative Example 3 wherein the polymer (P-1) is used alone. Especially, Example 3 uses the polymer (P-2) having Mn of 18,000, whereby the viscosity increase at 70°C after 4 weeks is extremely low.

INDUSTRIAL APPLICABILITY

The polymer composition of the present invention can be made to a curable composition capable of forming a cured product excellent in hardness. The polymer composition of the present invention is useful as an adhesive to be used in various fields of e.g. a sealing material (e.g. an elastic sealing material sealant for construction or a sealing material for double glass), a sealing agent (e.g. a sealing agent for rust prevention and water prevention of the terminal portion of a glass or a sealing agent of the backside of a solar cell) or an electrical insulation material (an insulating coating agent for an electrical wire and a cable). Further, the polymer composition of the present invention is also useful as an adhesive, a coating material, a film material, a gasket material and a casting material.

## Claims

1. A polymer composition comprising from 0.05 to 10 parts by mass of a compound (O) having a hydroxyl group represented by the following formula (2), per 100 parts by mass of an alkoxysilyl group-containing oxyalkylene polymer (P) having a urethane bond, which is obtained by a urethanization reaction between a polymer (pP) having a polyoxyalkylene chain and a hydroxyl group and a compound (U) having an alkoxysilyl group and an isocyanate group represented by the following formula (1):

$$(X^1\text{-})_3Si\text{-}Q^U\text{-}NCO \qquad (1)$$

(wherein each $X^1$ is independently a $C_{1-6}$ alkoxy group, and $Q^U$ is a divalent $C_{1-20}$ organic group)

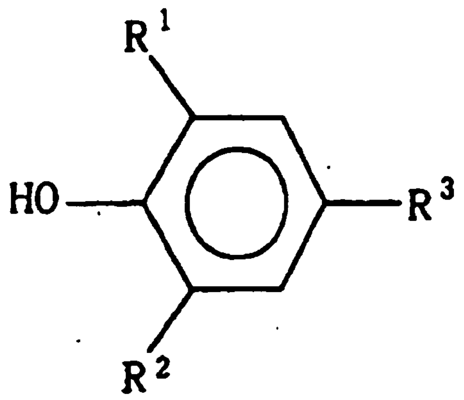

(2)

(wherein each of $R^1$ and $R^2$ is a hydrogen atom or a $C_{1-6}$ saturated hydrocarbon group, at least one of them is a $C_{1-6}$ saturated hydrocarbon group, and $R^3$ is a $C_{2-35}$ hydrocarbon group).

2. The polymer composition according to Claim 1, wherein $R^1$ and $R^2$ of the above compound (O) of the formula (2) are tert-butyl groups.

3. The polymer composition according to Claim 1 or 2, wherein the above compound (O) is a compound represented by the following formula (3):

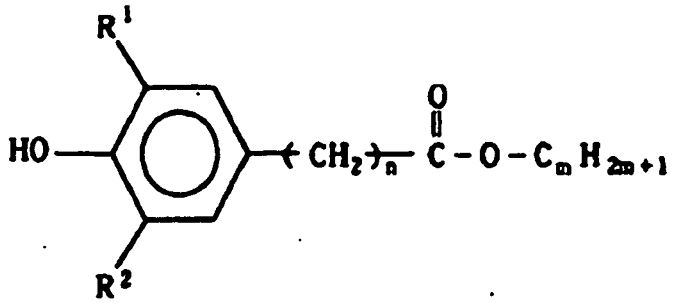

(3)

(wherein each of $R^1$ and $R^2$ is a hydrogen atom or a $C_{1-6}$ saturated hydrocarbon group, at least one of them is a $C_{1-6}$ saturated hydrocarbon group, and n and m are integers which satisfy $1 \leq n+m \leq 30$).

4. The polymer composition according to Claim 1, 2 or 3, wherein the number average molecular weight per terminal group of the above polymer (P) is at least 5,000.

5. The polymer composition according to any one of Claims 1 to 4, wherein the number average molecular weight per terminal group of the above polymer (P) is at least 7,500.

6. The polymer composition according to any one of Claims 1 to 5, wherein the above polymer (pP) is obtained by ring-opening polymerization of an alkylene oxide with a compound having an active hydrogen atom in the presence of a double metal cyanide complex catalyst having an organic ligand.

7. The polymer composition according to any one of Claims 1 to 6, wherein a double metal cyanide complex catalyst having an organic ligand is used in the urethanization reaction of the above polymer (pP) with compound (U).

8. The polymer composition according to any one of Claims 1 to 6, wherein the above polymer (pP) is a polymer containing a polymerized unit of an oxyalkylene formed by ring-opening polymerization of a propylene oxide.

9. The polymer composition according to Claim 8, wherein the double metal cyanide complex catalyst having an organic ligand used in the urethanization reaction of the above polymer (pP) with compound (U) is used in an amount of from 5 to 500 ppm based on the mass of the polymer (pP).

10. The polymer composition according to any one of Claims 6 to 9, wherein the double metal cyanide complex catalyst having an organic ligand has a skeleton of a double metal cyanide complex made of a combination of zinc and cobalt.

11. The polymer composition according to any one of Claims 1 to 8, wherein $X^1$ in the formula (1) for the above polymer (pP) is a methoxy group.

12. A curable composition containing the polymer composition as defined in any one of Claims 1 to 11 and a curing catalyst.

**Patentansprüche**

1. Polymerzusammensetzung, umfassend 0,05 bis 10 Gewichtsteile einer Verbindung (O) mit einer Hydroxylgruppe, die von der folgenden Formel (2) dargestellt wird, pro 100 Gewichtsteile eines Alkoxysilylgruppen-enthaltenden Oxyalkylenpolymers (P) mit einer Urethanbindung, die erhältlich ist durch eine Urethanbildungsreaktion zwischen einem Polymer (pP), das eine Polyoxyalkylenkette und eine Hydroxylgruppe aufweist, und einer Verbindung (U), die eine Alkoxysilylgruppe und eine Isocyanatgruppe aufweist, der folgenden Formel (1):

$$(X^1\text{-})_3\text{Si-Q}^U\text{-NCO} \qquad (1)$$

(wobei jedes $X^1$ unabhängig für eine $C_{1-6}$ Alkoxygruppe steht und $Q^U$ für eine zweiwertige $C_{1-20}$ organische Gruppe steht).

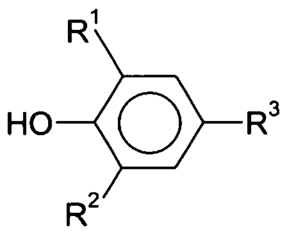

(2)

(wobei jedes $R^1$ und $R^2$ für ein Wasserstoffatom oder eine $C_{1-6}$ gesättigte Kohlenwasserstoffgruppe steht, wobei mindestens eine davon eine $C_{1-6}$ gesättigte Kohlenwasserstoffgruppe ist, und $R^3$ für eine $C_{2-35}$ Kohlenwasserstoffgruppe steht).

2. Die Polymerzusammensetzung nach Anspruch 1, wobei $R^1$ und $R^2$ der obigen Formel (O) in der Formel (2) für *tert.*-Butylgruppen stehen.

3. Die Polymerzusammensetzung nach Anspruch 1 oder 2, wobei die obige Verbindung (O) eine Verbindung der folgenden Formel (3) ist:

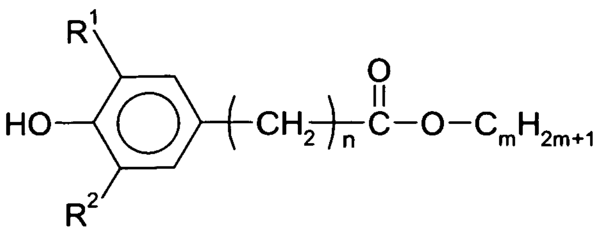

(3)

(wobei jedes $R^1$ und $R^2$ für ein Wasserstoffatom oder eine $C_{1-6}$ gesättigte Kohlenwasserstoffgruppe steht, mindestens eines davon für eine $C_{1-6}$ gesättigte Kohlenwasserstoffgruppe steht, und n und m ganze Zahlen bedeuten, die folgende Gleichung erfüllen: $1 \leq n+m \leq 30$).

4. Die Polymerzusammensetzung nach Anspruch 1, 2 oder 3, wobei das Molekulargewichtszahlenmittel pro terminaler

Gruppe des obigen Polymers (P) mindestens 5000 beträgt.

5. Die Polymerzusammensetzung nach einem der Ansprüche 1 bis 4, wobei das Molekulargewichtszahlenmittel pro terminaler Gruppe des obigen Polymers (P) mindestens 7500 beträgt,

6. Die Polymerzusammensetzung nach einem der Ansprüche 1 bis 5, wobei das obige Polymer (pP) erhältlich ist durch Ringöffnungspolymerisation eines Alkylenoxids mit einer Verbindung mit einem aktiven Wasserstoffatom in Gegenwart eines Doppelmetallcyanidkomplex-Katalysators, der einen organischen Liganden aufweist.

7. Die Polymerzusammensetzung nach einem der Ansprüche 1 bis 6, wobei ein Doppelmetallcyanidkomplex-Katalysator, der einen organischen Liganden aufweist, verwendet wird für die Urethanisierungsreaktion des Polymers (pP) mit der Verbindung (U).

8. Die Polymerzusammensetzung nach einem der Ansprüche 1 bis 6, wobei das obige Polymer (pP) ein Polymer ist, das eine polymerisierte Einheit eines Oxyalkylens aufweist, die durch Ringöffnungspolymerisation von Propylenoxid gebildet wurde.

9. Die Polymerzusammensetzung nach Anspruch 8, wobei der Doppelmetallcyanidkomplex-Katalysator, der einen organischen Liganden aufweist, in der Urethanisierungsreaktion des obigen Polymers (pP) mit der Verbindung (U) in einer Menge von 5 bis 500 ppm auf der Grundlage der Masse des Polymers (pP) eingesetzt wird.

10. Die Polymerzusammensetzung nach einem der Ansprüche 6 bis 9, wobei der Doppelmetallcyanidkomplex-Katalysator, der einen organischen Liganden aufweist, ein Skelett eines Doppelmetallcyanidkompexes aufweist, der aus einer Kombination von Zink und Kobalt aufgebaut ist.

11. Die Polymerzusammensetzung nach einem der Ansprüche 1 bis 8, wobei $X^1$ in der Formel (1) des obigen Polymers (pP) für eine Methoxygruppe steht.

12. Härtbare Zusammensetzung, enthaltend die Polymerzusammensetzung, wie sie in einem der Ansprüche 1 bis 11 definiert wird, sowie einen Härterkatalysator.

**Revendications**

1. Composition de polymère comprenant de 0,05 à 10 parties en masse d'un composé (O) ayant un groupe hydroxyle représenté par la formule (2) suivante, pour 100 parties en masse d'un polymère d'oxyalkylène contenant un groupe alcoxysilyle (P) ayant une liaison uréthane, qui est obtenu par réaction d'uréthanisation entre un polymère (pP) ayant une chaîne polyoxyalkylène et un groupe hydroxyle et un composé (U) ayant un groupe alcoxysilyle et un groupe isocyanate, représenté par la formule (1) suivante :

$$(X^1\text{-})_3Si\text{-}Q^U\text{-}NCO \qquad (1)$$

(dans laquelle chaque $X^1$ est indépendamment un groupe alcoxy en $C_1$ à $C_6$ et $Q^U$ est un groupe organique divalent en $C_1$ à $C_{20}$)

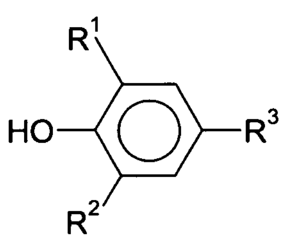

(2)

(dans laquelle chacun parmi $R^1$ et $R^2$ est un atome d'hydrogène ou un groupe hydrocarboné saturé en $C_1$ à $C_6$, au moins l'un d'entre eux étant un groupe hydrocarboné saturé en $C_1$ à $C_6$, et $R^3$ est un groupe hydrocarboné en $C_2$

à $C_{35}$).

2. Composition de polymère selon la revendication 1, dans laquelle $R^1$ et $R^2$ du composé (O) ci-dessus de formule (2) sont des groupes tert-butyle.

3. Composition de polymère selon la revendication 1 ou 2, dans laquelle le composé (O) ci-dessus est un composé représenté par la formule (3) suivante :

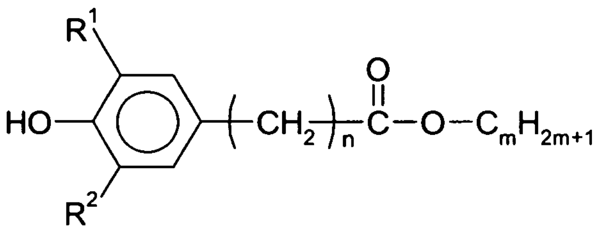

(3)

(dans laquelle chacun parmi $R^1$ et $R^2$ est un atome d'hydrogène ou un groupe hydrocarboné saturé en $C_1$ à $C_6$, au moins l'un d'entre eux étant un groupe hydrocarboné saturé en $C_1$ à $C_6$, et n et m sont des entiers satisfaisant à $1 \leq n + m \leq 30$).

4. Composition de polymère selon la revendication 1, 2 ou 3, dans laquelle la masse moléculaire moyenne en nombre par groupe terminal du polymère (P) ci-dessus est d'au moins 5000.

5. Composition de polymère selon l'une quelconque des revendications 1 à 4, dans laquelle la masse moléculaire moyenne en nombre par groupe terminal du polymère (P) ci-dessus est d'au moins 7500.

6. Composition de polymère selon l'une quelconque des revendications 1 à 5, dans laquelle le polymère (pP) ci-dessus est obtenu par polymérisation par ouverture de cycle d'un oxyde d'alkylène avec un composé ayant un atome d'hydrogène actif en présence d'un catalyseur complexe de cyanure métallique double ayant un ligand organique.

7. Composition de polymère selon l'une quelconque des revendications 1 à 6, dans laquelle un catalyseur complexe de cyanure métallique double ayant un ligand organique est utilisé dans la réaction d'uréthanisation du polymère (pP) ci-dessus avec le composé (U).

8. Composition de polymère selon l'une quelconque des revendications 1 à 6, dans laquelle le polymère (pP) ci-dessus est un polymère contenant un motif polymérisé d'un oxyalkylène formé par polymérisation par ouverture de cycle d'un oxyde de propylène.

9. Composition de polymère selon la revendication 8, dans laquelle le catalyseur complexe de cyanure métallique double ayant un ligand organique utilisé dans la réaction d'uréthanisation du polymère (pP) ci-dessus avec le composé (U) est utilisé en une quantité de 5 à 500 ppm par rapport à la masse du polymère (pP).

10. Composition de polymère selon l'une quelconque des revendications 6 à 9, dans laquelle le catalyseur complexe de cyanure métallique double ayant un ligand organique a un squelette d'un complexe de cyanure métallique double fait d'une combinaison de zinc et de cobalt.

11. Composition de polymère selon l'une quelconque des revendications 1 à 8, dans laquelle $X^1$ dans la formule (1) pour le polymère (pP) ci-dessus est un groupe méthoxy.

12. Composition durcissable contenant la composition de polymère telle que définie dans l'une quelconque des revendications 1 à 11 et un catalyseur de durcissement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3072527 A
- JP 3047825 A
- JP 10245482 A